# FASCICULE DE BREVET EUROPEEN

(11) **EP 3 724 014 B1**
(45) Date de publication et mention de la délivrance du brevet: **29.12.2021**
(21) Numéro de dépôt: 18821705.3
(22) Date de dépôt: 08.11.2018
(51) Int. Cl.: B60H 1/00, B60W 50/00, B60H 1/32

(54) **PROCEDE D'ESTIMATION D'UNE QUANTITE D'ENERGIE POUR UN SYSTEME DE CONDITIONNEMENT THERMIQUE DE VEHICULE AUTOMOBILE**
VERFAHREN ZUR SCHÄTZUNG EINER ENERGIEMENGE FÜR EINE KLIMAANLAGE EINES KRAFTFAHRZEUGS
METHOD FOR ESTIMATING AN ENERGY QUANTITY FOR A THERMAL CONDITIONING SYSTEM OF A MOTOR VEHICLE

(30) Priorité: 15.12.2017 FR 1762259
(43) Date de publication de la demande: 21.10.2020
(73) Titulaire: PSA Automobiles SA, 78300 Poissy (FR)
(72) Inventeur: GAUDICHON, Ludovic, 78210 ST CYR L'ECOLE (FR)
(86) Numéro de dépôt international: PCT/FR2018/052760
(87) Numéro de publication internationale: WO 2019/115893

(56) Documents cités:
- WO-A1-2017/016823
- DE-A1-102014 221 328
- FR-A1- 3 027 682
- US-A1- 2014 277 869
- US-A1- 2017 124 873

## Description

Le domaine de l'invention concerne un procédé d'estimation d'une quantité d'énergie nécessaire pour un système de conditionnement thermique d'habitacle d'un véhicule lors du roulage d'un parcours planifié.

On connait le document WO2014022026_A1 décrivant une solution de pré-conditionnement thermique de l'habitacle lors de la recharge électrique d'un véhicule. Ce document décrit une estimation de la durée de conditionnement à partir de la température instantanée pour atteindre une température cible en fin de recharge.

Il est également connu dans l'état de la technique le document US20150134206_A1 décrivant un système d'estimation de la puissance consommée par les systèmes d'un véhicule automobile hybride pour la gestion de la répartition de la puissance de traction durant un parcours planifié. Plus précisément, ce système planifie la puissance de traction nécessaire pour chaque segment d'un parcours et adapte la puissance délivrée au système de conditionnement thermique au cours du trajet en fonction de la puissance de traction planifiée.

Par conséquent, en cas de besoin important pour le conditionnement thermique de l'habitacle (en refroidissement ou en chauffage), la température d'habitacle peut devenir incommodante pour les passagers si la puissance de traction nécessaire est trop importante. En termes d'agrément de conduite cette situation n'est pas acceptable. De plus, si les besoins futurs pour le conditionnement thermique de l'habitacle sont mal estimés la décharge de la batterie sera plus importante que prévue, et il se peut que le véhicule ne parvienne pas à la destination planifiée avec la réserve d'énergie initiale. Dans le cas d'un véhicule hybride, une planification erronée de la gestion énergétique entraine le fonctionnement du groupe motopropulseur avec une réserve faible d'énergie c'est-à-dire dans des plages de fonctionnement non optimales. Par conséquent, le bilan de consommation d'énergie fossile n'est pas optimal.

Pour résoudre ce problème, la demanderesse a déposé par le passé le document brevet FR3037025_A1 décrivant un procédé de contrôle de la décharge de la batterie optimal. Le procédé décrit dans la demande prévoit pour exécuter un parcours planifié d'estimer des besoins énergétiques futurs, notamment pour le système de conditionnement thermique en fonction des conditions extérieures du parcours, et d'adapter tout au long du parcours la répartition de la puissance de traction entre le moteur thermique et la machine électrique en fonction des besoins futurs. Dans ce document, il est décrit la prise en compte d'une part d'une puissance nécessaire pour converger vers une température cible et d'autre part d'une puissance pour maintenir l'habitacle à la température cible.

On connait en outre des documents de brevet FR-A1-3027682, WO-A1-2017016823 et US-A1-2017124873, un procédé conforme au préambule de la revendication 1.

L'objet de cette invention est de proposer un procédé optimal d'estimation de la quantité d'énergie à réserver pour les besoins de conditionnement thermique de l'habitacle pour exécuter un parcours planifié. Un autre objectif de l'invention est de proposer un procédé d'estimation nécessitant peu de ressources de calcul.

Plus précisément, l'invention concerne un procédé d'estimation d'une quantité d'énergie nécessaire pour un système de conditionnement thermique d'habitacle d'un véhicule lors du roulage d'un parcours planifié comportant le calcul d'une première quantité d'énergie pour converger vers une consigne de température et le calcul d'une deuxième quantité d'énergie pour maintenir la température de l'habitacle à la consigne de température, la première quantité d'énergie et la deuxième quantité d'énergie étant calculées respectivement au moyen d'un premier et d'un deuxième modèles prédéterminés en fonction de la consigne de température, d'un paramètre représentatif de la température de l'air extérieur et d'un paramètre représentatif d'un ensoleillement. Selon l'invention, les premier et deuxième modèles déterminent des valeurs de puissance applicable pour le calcul des première et deuxième quantités d'énergie respectivement par cartographie prédéterminée de puissance.

Selon une variante, les valeurs de puissance applicable sont déterminées par cartographie en fonction de valeurs d'ensoleillement prédéterminées, de la consigne de température et du paramètre représentatif de la température de l'air extérieur.

Selon une variante, la première quantité d'énergie et la deuxième quantité d'énergie sont calculées en outre en fonction d'une durée de convergence, un troisième modèle déterminant des valeurs de la durée de convergence applicable par cartographie prédéterminée de durée de convergence.

Selon une variante, les valeurs de la durée de convergence applicables sont déterminées par cartographie en fonction de valeurs d'ensoleillement prédéterminées, de la consigne de température et du paramètre représentatif de la température de l'air extérieur.

Selon une variante, le procédé comporte en outre les étapes de calcul d'une durée de convergence restante après la détection du déclenchement du système de conditionnement thermique, et l'actualisation de la première quantité d'énergie et de la deuxième quantité d'énergie en fonction de la durée de convergence restante.

Plus précisément, la durée de convergence restante est déterminée à partir d'une estimation de la durée d'activation du système de conditionnement thermique et de la durée de convergence.

Selon une variante, la durée d'activation du système de conditionnement thermique est calculée par calcul d'intégration temporelle d'un signal de donnée représentatif de l'activation du système de conditionnement.

Selon une variante, la consigne de température est une valeur figée et programmée avant le roulage du parcours planifié.

Il est prévu selon l'invention un dispositif de contrôle pour un véhicule automobile configuré pour mettre en œuvre le procédé selon l'un quelconque des modes de réalisation précédents.

Il est prévu également un véhicule automobile comprenant un tel dispositif de contrôle.

L'invention est une solution de calcul qui requière peu de ressources de calcul s'appuyant sur des modèles empiriques obtenus par essais sur les véhicules. Cette solution d'estimation permet d'obtenir une estimation précise des besoins futurs avant le roulage du parcours afin de contrôler optimalement la décharge de la batterie du véhicule lors du roulage du parcours. Grâce au procédé d'estimation, on détermine précisément une quantité d'énergie restante pour la traction du véhicule de manière à adapter le seuil de démarrage du moteur thermique.

D'autres caractéristiques et avantages de la présente invention apparaîtront plus clairement à la lecture de la description détaillée qui suit comprenant des modes de réalisation de l'invention donnés à titre d'exemples nullement limitatifs et illustrés par les dessins annexés, dans lesquels :
- la figure 1 représente schématiquement un organigramme représentant un module d'estimation des besoins énergétiques pour un système de conditionnement de l'habitacle conformément à l'invention,
- la figure 2 représente un modèle déterminant par cartographie prédéterminée la puissance de convergence applicable.

L'invention concerne le domaine de la planification de parcours pour contrôler la décharge d'un accumulateur d'énergie d'un véhicule automobile rechargeable et plus précisément le domaine de la gestion thermique d'un système de conditionnement thermique de véhicule. Un dispositif de contrôle du véhicule à calculateurs à circuits intégrés, tel le superviseur du véhicule, est configuré pour mettre en œuvre le procédé d'estimation d'une quantité d'énergie nécessaire pour le système de conditionnement thermique d'habitacle. L'invention s'applique de préférence à un véhicule hybride de manière à adapter le seuil de démarrage du moteur thermique en fonction d'une quantité d'énergie restante dédiée à la traction pour un mode de roulage hybride et pour exécuter un parcours planifié. Ce choix est réalisé pour assurer des prestations de confort en habitacle acceptables pour les passagers et pour réduire la consommation d'énergie fossile.

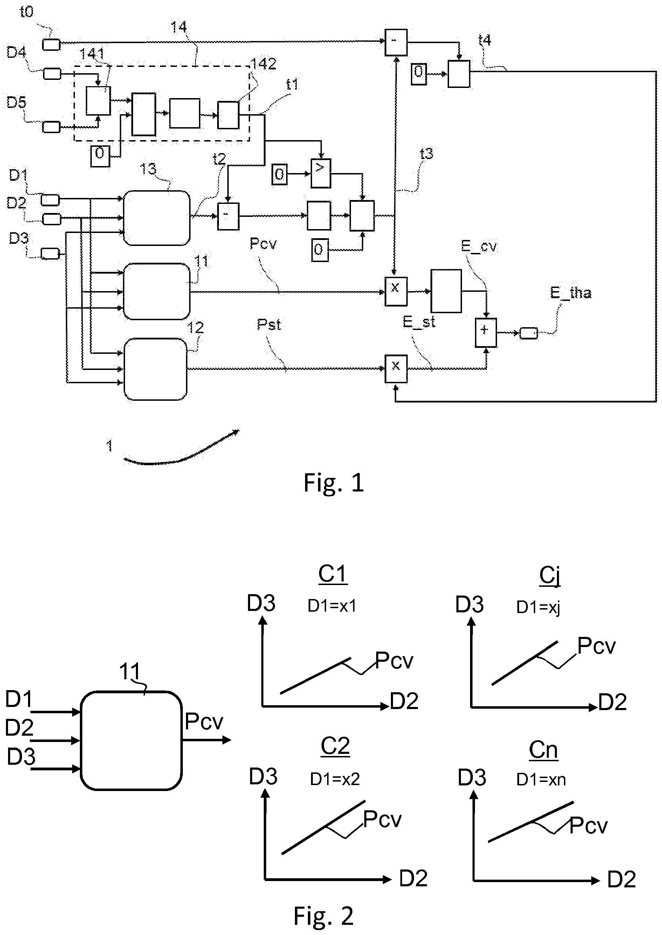

La figure 1 représente plus précisément un module d'estimation 1 du dispositif de contrôle en charge d'estimer des besoins énergétiques du système de conditionnement thermique du véhicule automobile. Le module d'estimation 1 permet de calculer avant et durant le roulage d'un parcours une quantité d'énergie nécessaire pour le roulage du parcours planifié pour respecter une consigne de température programmée. L'invention s'applique préférentiellement pour un véhicule automobile rechargeable (électrique, hybride électrique) de manière à contrôler optimalement la décharge d'une batterie. Le procédé d'estimation des besoins énergétiques comporte la détermination de puissance et de quantités d'énergie qui sont, dans le cadre d'un véhicule hybride électrique, des puissances électriques de consommation prélevées sur un système de batterie, exprimées en watts, et des quantités d'énergies électriques déchargées sur un système de batterie exprimées en joules ou wattheures. De plus, les paramètres de durée sont exprimés en unité de temps (secondes, minutes ou heures). On précise de plus que la notion de quantité d'énergie fait référence à une réserve d'énergie attribuée pour le besoin de conditionnement thermique de l'habitacle.

Typiquement, un système de conditionnement thermique est un système de type pompe à chaleur destiné à refroidir et chauffer l'habitacle du véhicule. Ce système comporte un compresseur alimenté électriquement par un circuit d'alimentation électrique du véhicule comprenant une ou plusieurs batteries électriques. Pour son fonctionnement, le système de conditionnement thermique puise de l'énergie électrique qu'il est nécessaire d'anticiper pour le roulage d'un parcours planifié calculé par un système de navigation du véhicule. Un système de conditionnement de type chauffage électrique peut être également pris en compte dans l'évaluation des besoins électriques du véhicule. Ce dernier système fonctionne généralement en phase initiale de roulage tant que le moteur thermique n'a pas atteint une température de fonctionnement suffisante pouvant être exploitée pour le besoin thermique habitacle.

A cet effet, comme on le voit en figure 1, le module d'estimation 1 reçoit en entrée des données t0, D1, D2, D3, D4, D5. La durée t0 est la durée totale prévue de roulage pour exécuter le parcours planifié, D1 est un paramètre représentatif de l'ensoleillement auquel le véhicule est susceptible d'être exposé durant le parcours planifié, D2 est un paramètre représentatif de la température de l'air extérieur durant le parcours, D3 est la consigne de température programmée par défaut dans le système de conditionnement thermique, D4 est un signal de donnée représentatif de l'activation d'un premier système de conditionnement thermique, tel une pompe à chaleur et D5 est un signal de donnée représentatif de l'activation d'un deuxième système de conditionnement thermique, tel un chauffage électrique.

On notera que t0 est la valeur de la durée totale du parcours entre le point de localisation du véhicule sur le parcours et le point de destination. De plus, le procédé d'estimation est exécuté en prenant en compte deux signaux D4, D5 provenant de deux systèmes de conditionnement thermique. Toutefois dans une variante de réalisation, il peut y avoir un seul signal de donnée représentatif de l'activation d'un unique système de conditionnement, ou trois signaux ou plus, en cas de présence de trois systèmes de conditionnement thermique ou plus dans le véhicule.

Le paramètre d'ensoleillement D1 et le paramètre de température extérieur D2 proviennent d'un système de navigation, d'un système de prévision météorologique apte à collecter ces informations relatives aux conditions extérieures de roulage ou d'un système de capteurs du véhicule. La consigne de température D3 est définie par défaut à une valeur figée, par exemple 20°c environ. Cette valeur est le résultat d'une observation statistique démontrant que cette consigne est la plus représentative des usages d'un véhicule. L'utilisation d'une valeur figée de température réduit les ressources de calculs nécessaire pour la mise en œuvre du module d'estimation 1. Dans une variante, il est envisageable que D3 puisse être programmée avant le roulage du parcours planifié par le conducteur.

Les paramètres D1, D2, D3 sont destinés à être exploités par des modules de calcul du module d'estimation 1 pour estimer les besoins énergétiques. Plus précisément, le module d'estimation 1 comporte un module 13 de calcul d'une durée de convergence t2 en température vers la consigne de température, un module 11 de calcul d'une puissance Pcv à fournir pour la phase de convergence et un module 12 de calcul d'une puissance Pst à fournir pour maintenir la température à la consigne de température.

Le procédé d'estimation selon l'invention comporte le calcul d'une première quantité d'énergie E_cv pour converger vers la consigne de température et le calcul d'une deuxième quantité d'énergie E_st pour maintenir la température de l'habitacle à la consigne de température. La première quantité d'énergie E_cv et la deuxième quantité d'énergie E_st sont calculées respectivement au moyen d'un premier et d'un deuxième modèles prédéterminés en fonction de la consigne de température D3, du paramètre D2 représentatif de la température de l'air extérieur et du paramètre D1 représentatif de l'ensoleillement.

De plus, comme illustré par la figure 1, la première quantité d'énergie E_cv de convergence est calculée en fonction d'au moins une durée de convergence t2, une puissance Pcv est multipliée par la durée t2. Les blocs « X » sont des multiplicateurs, les blocs « - » sont des soustracteurs, le bloc « + » est un soustracteur, les blocs « 0 » fournissent des valeurs d'initialisation des calculs à zéro, le bloc « > » retourne la valeur la plus élevée entre les deux valeurs à ses entrées. En cas d'allumage d'un des deux systèmes de conditionnement thermique, la puissance Pcv est multipliée par la valeur t2 à laquelle est soustraite la durée restante t3 pour calculer la première quantité d'énergie. La deuxième quantité d'énergie de maintien E_st est calculée en fonction d'au moins une durée de maintien t4, une puissance Pst est multipliée par la durée t4. La durée de maintien t4 est égale à t0-t2 tant qu'un système de conditionnement thermique n'est pas allumé, ou t4=t0-t3, en cas d'allumage d'un des deux systèmes de conditionnement thermique. En outre, le troisième modèle 13 détermine des valeurs de la durée de convergence applicable t2.

Afin de réduire les ressources de calcul nécessaires pour l'estimation de la quantité d'énergie demandée par le système de conditionnement, les premier et deuxième modèles des modules 11, 12 déterminent des valeurs de puissance applicables Pcv, Pst pour le calcul de la première quantité d'énergie de convergence E_cv et pour le calcul de la deuxième quantité d'énergie de maintien E_st respectivement par cartographie prédéterminée de puissance.

Plus précisément, les valeurs de puissances applicables sont déterminées par cartographie en fonction de valeurs d'ensoleillement prédéterminées, de la consigne de température D3 et du paramètre représentatif de la température de l'air extérieur D2. Les puissances applicables sont des valeurs de puissance de consommation électrique sur un système de batterie du véhicule et sont exprimées en watts ou kilowatts.

De plus, le troisième modèle du module 13 détermine également des valeurs de la durée de convergence t2 applicable par cartographie prédéterminée de durée de convergence. Identiquement à la cartographie de puissance, les valeurs de la durée de convergence applicables sont déterminées par cartographie en fonction de valeurs d'ensoleillement prédéterminées, de la consigne de température et du paramètre représentatif de la température de l'air extérieur.

En figure 2, on a représenté le module 11 de calcul de la puissance de convergence Pcv. Ce module reçoit en entrée une valeur d'ensoleillement D1 pouvant être comprise entre des valeurs prédéterminées x1 et xn, une valeur de température extérieure D2 et une valeur de consigne de température D3, ici 20°c par défaut. A partir d'une cartographie représentant des courbes de puissances C1, C2, Cj, Cn pour respectivement chacune des valeurs prédéterminées d'ensoleillement x1 à xn (ici représentées par quatre courbes pour des valeurs de D1 égales à x1, x2, xj et xn), le modèle du module 11 détermine la valeur de la puissance applicable Pcv fournie par la cartographie en fonction de la valeur d'ensoleillement D1, de la température extérieure D2 et de la consigne D3.

Les calculs de la puissance de maintien Pst et de la durée de convergence t2 exploitent le même processus de détermination par cartographie en fonction de la valeur d'ensoleillement D1, de la température extérieure D2 et de la consigne D3.

La cartographie a été déterminée en conception du véhicule et couvre les situations de roulage attendues pour le véhicule. Le procédé exploite une cartographie pour chaque modèle de puissance et de durée de convergence (les modules 11,12,13), chaque cartographie ayant un nombre de courbes qui est égal au nombre de valeurs d'ensoleillement prédéterminées choisies en conception. Les cartographies sont mémorisées en mémoire du dispositif de contrôle lors du paramétrage du véhicule. Ainsi, une quantité d'énergie nécessaire est déterminable sans recours à des calculs complexes avant le roulage du parcours et seulement à partir de l'ensoleillement D1 prévu sur le parcours (ayant en correspondance la valeur prédéterminée d'ensoleillement à appliquer parmi les valeurs x1 à xn), de la température extérieure D2 prévue et de la consigne de température D3. De plus, le procédé d'estimation des quantités d'énergie comporte des étapes d'actualisation de la quantité d'énergie E_tha au cours du roulage du parcours.

Un autre avantage de l'invention est que le dispositif de contrôle du véhicule est en mesure de piloter un procédé optimal de contrôle de la décharge grâce à une estimation précise de la quantité d'énergie. Cette estimation nécessite peu de ressources de calcul du fait qu'elle est basée sur des cartographies obtenues empiriquement lors de la conception du véhicule.

Par ailleurs, comme on le voit en figure 1, le module d'estimation 1 comporte un module 14 de calcul de la durée d'activation t1 du système de conditionnement thermique. Ce module permet avantageusement d'ajuster les calculs de la durée de convergence t2 et de la durée de maintien t4 en fonction de l'état d'activation des systèmes de conditionnement thermique. Ainsi, tant que les systèmes de conditionnement thermique ne sont pas activés, la quantité d'énergie E_tha réservée pour le besoin habitacle est planifiée en prenant en compte l'intégralité de l'énergie relative à la phase de convergence, qui dans la plupart des cas représente la demande en énergie la plus importante.

La durée d'activation t1 calculée par le module 14 est calculée par calcul d'intégration temporelle d'un signal de donnée représentatif de l'activation du système de conditionnement. Ce signal de donnée est fonction de l'état d'activation des signaux D4, D5 collectés en entrée du module 14 par un bloc de détection logique 141 de type « OU », s'activant dès qu'au moins un des deux systèmes de conditionnement est actif. La sortie du bloc de détection logique « OU » est ensuite lue par un bloc intégrateur temporel 142 transmettant un signal t1 représentatif de la durée d'activation.

A partir de la durée d'activation t1, le procédé comporte alors le calcul d'une durée de convergence restante t3 après la détection du déclenchement du conditionnement thermique, et l'actualisation durant le roulage du parcours planifié de la première quantité d'énergie E_cv et de la deuxième quantité d'énergie E_st en fonction de la durée de convergence restante t3. La durée de convergence restante t3 est obtenue en soustrayant la durée d'activation t1 de la durée de convergence initiale t2, t3=t2-t1. La durée de maintien t4 est obtenue en soustrayant la durée de convergence restante t3 de la durée du parcours t0.

Finalement, la quantité d'énergie nécessaire E_tha = E_cv +E_st=Pcv^{∗}t3 +Pst^{∗}t4. Pcv et Pst sont les puissances calculées par les modèles 11, 12. On notera que ces puissances sont attribuées pour l'ensemble du parcours planifié pour calculer la quantité d'énergie qui sera nécessaire pour les besoins de conditionnement thermique pour le roulage dudit parcours.

## Revendications

1. Procédé d'estimation d'une quantité d'énergie (E_tha) nécessaire pour un système de conditionnement thermique d'habitacle d'un véhicule lors du roulage d'un parcours planifié, le procédé étant mis en œuvre par un module d'estimation (1) d'un dispositif de contrôle du véhicule en charge d'estimer des besoins énergétiques du système de conditionnement thermique du véhicule et comportant le calcul d'une première quantité d'énergie (E_cv) de convergence vers une consigne de température (D3) et le calcul d'une deuxième quantité d'énergie (E_st) de maintien de la température de l'habitacle à la consigne de température, la première quantité d'énergie (E_cv) et la deuxième quantité d'énergie (E_st) étant calculées respectivement au moyen d'un premier (11) et d'un deuxième (12) modèles prédéterminés le procédé étant **caractérisé en ce que** lesdits modèles sont prédéterminés en fonction de la consigne de température (D3), d'un paramètre (D2) représentatif de la température de l'air extérieur et d'un paramètre (D1) représentatif d'un ensoleillement, les premier et deuxième modèles (11, 12) déterminant des valeurs de puissance applicable (Pcv, Pst) pour le calcul des première et deuxième quantités d'énergie (E_cv, E_st) respectivement par cartographie prédéterminée de puissance mémorisée en mémoire du dispositif de contrôle.

2. Procédé selon la revendication 1, **caractérisé en ce que** les valeurs de puissance applicable sont déterminées par cartographie en fonction de valeurs d'ensoleillement prédéterminées (x1-xn), de la consigne de température (D3) et du paramètre représentatif de la température de l'air extérieur (D2).

3. Procédé selon la revendication 1 ou 2, **caractérisé en ce que** la première quantité d'énergie (E_cv) et la deuxième quantité d'énergie (E_st) sont calculées en outre en fonction d'une durée de convergence (t2), un troisième modèle (13) déterminant des valeurs de la durée de convergence applicable (t2) par cartographie prédéterminée de durée de convergence.

4. Procédé selon la revendication 3, **caractérisé en ce que** les valeurs de la durée de convergence applicables sont déterminées par cartographie en fonction de valeurs d'ensoleillement prédéterminées (x1-xn), de la consigne de température (D3) et du paramètre représentatif de la température de l'air extérieur (D2).

5. Procédé selon la revendication 3 ou 4, **caractérisé en ce qu'**il comporte en outre les étapes de calcul d'une durée de convergence restante (t3) après la détection du déclenchement du système de conditionnement thermique, et l'actualisation de la première quantité d'énergie (E_cv) et de la deuxième quantité d'énergie (E_st) en fonction de la durée de convergence restante (t3).

6. Procédé selon la revendication 5, **caractérisé en ce que** la durée de convergence restante (t3) est déterminée à partir d'une estimation de la durée d'activation (t1) du système de conditionnement thermique et de la durée de convergence (t2).

7. Procédé selon la revendication 6, **caractérisé en ce que** la durée d'activation (t1) du système de conditionnement thermique est calculée par calcul d'intégration temporelle d'un signal de donnée (D4 ; D5) représentatif de l'activation du système de conditionnement.

8. Procédé selon l'une quelconque des revendications 1 à 7, **caractérisé en ce que** la consigne de température (D3) est une valeur figée et programmée avant le roulage du parcours planifié.

9. Module d'estimation d'un dispositif de contrôle d'un véhicule en charge d'estimer des besoins énergétiques d'un système de conditionnement thermique du véhicule automobile, **caractérisé en ce qu'**il est configuré pour mettre en oeuvre le procédé selon l'une quelconque des revendications 1 à 8.

10. Véhicule automobile comprenant un module d'estimation d'un dispositif de contrôle selon la revendication 9.

## Patentansprüche

1. Verfahren zum Abschätzen einer für eine thermische Fahrgastraumklimatisierung eines Fahrzeugs beim Befahren einer geplanten Route notwendigen Energiemenge (E_tha), wobei das Verfahren durch ein Schätzmodul (1) eines für die Abschätzung der Energiebedarf der Fahrzeugklimaanlage und umfassend die Berechnung einer ersten Energiemenge (E_cv) zur Konvergenz zu einem Temperatursollwert (D3) und die Berechnung einer zweiten Energiemenge (E_st) zum Halten der Temperatur des Fahrgastraums auf dem Temperatursollwert, die erste Menge der Energie (E_cv) und der zweiten Energiemenge (E_st) jeweils mittels eines ersten (11) und eines zweiten (12) vorbestimmten Modells berechnet werden, wobei das Verfahren **dadurch gekennzeichnet ist, dass** die Modelle in Abhängigkeit von der Temperatursollwert (D3), eines Parameters (D2), der für die Außenlufttemperatur repräsentativ ist, und eines Parameters (D1), der für die Sonneneinstrahlung repräsentativ ist, bestimmen das erste und zweite Modell (11, 12) anwendbare Leistungswerte (Pcv, Pst) zum Berechnen der ersten und zweiten Energiemengen (E_cv, E_st) jeweils durch eine im Speicher des Steuergeräts gespeicherte vorbestimmte Leistungsabbildung.

2. Verfahren nach Anspruch 1, **dadurch gekennzeichnet, dass** die anwendbaren Leistungswerte durch Mapping in Abhängigkeit von vorgegebenen Sonnenscheinwerten (x1-xn), des Temperatursollwertes (D3) und des repräsentativen Parameters ermittelt werden Temperatur Außenluft (D2).

3. Verfahren nach Anspruch 1 oder 2, **dadurch gekennzeichnet, dass** die erste Energiemenge (E_cv) und die zweite Energiemenge (E_st) weiterhin in Abhängigkeit von einer Konvergenzzeit (t2) berechnet werden, ein drittes Modell (13) Bestimmen von Werten der anwendbaren Konvergenzzeit (t2) durch eine vorbestimmte Konvergenzzeitabbildung.

4. Verfahren nach Anspruch 3, **dadurch gekennzeichnet, dass** die Werte der anwendbaren Konvergenzzeit durch Mapping in Abhängigkeit von vorgegebenen Sonnenscheinwerten (x1-xn), des Temperatursollwertes (D3) und des Repräsentanten ermittelt werden Parameter der Außenlufttemperatur (D2).

5. Verfahren nach Anspruch 3 oder 4, **dadurch gekennzeichnet, dass** es ferner die Schritte des Berechnens einer verbleibenden Konvergenzzeit (t3) nach dem Erkennen der Auslösung des thermischen Konditionierungssystems und des Aktualisierens der ersten Energiemenge (E_cv) und der zweiten Energiemenge (E_st) als Funktion der verbleibenden Konvergenzzeit (t3).

6. Verfahren nach Anspruch 5, **dadurch gekennzeichnet, dass** die verbleibende Konvergenzzeit (t3) aus einer Schätzung der Aktivierungszeit (t1) des thermischen Konditionierungssystems und der Konvergenzzeit (t2) bestimmt wird.

7. Verfahren nach Anspruch 6, **dadurch gekennzeichnet, dass** die Aktivierungszeit (t1) des thermischen Konditionierungssystems durch Berechnen der zeitlichen Integration eines die Aktivierung des Verpackungssystems repräsentierenden Datensignals (D4 ; D5) berechnet wird.

8. Verfahren nach einem der Ansprüche 1 bis 7, **dadurch gekennzeichnet, dass** der Temperatursollwert (D3) ein fester und vor dem Abrollen der geplanten Route programmierter Wert ist.

9. Modul zum Schätzen eines Steuergeräts eines Fahrzeugs, das für die Schätzung des Energiebedarfs einer Klimaanlage des Kraftfahrzeugs zuständig ist, **dadurch gekennzeichnet, dass** es eingerichtet ist, das Verfahren nach einem der Ansprüche 1 bis 8 durchzuführen.

10. Kraftfahrzeug mit einem Modul zum Schätzen eines Steuergeräts nach Anspruch 9.

## Claims

1. Method for estimating a quantity of energy (E_tha) necessary for a thermal cabin conditioning system of a vehicle when driving a planned route, the method being implemented by an estimation module ( 1) of a vehicle control device in charge of estimating the energy needs of the thermal conditioning system of the vehicle and comprising the calculation of a first quantity of energy (E_cv) of convergence towards a temperature setpoint (D3) and calculating a second quantity of energy (E_st) for maintaining the temperature of the passenger compartment at the temperature setpoint, the first quantity of energy (E_cv) and the second quantity of energy (E_st) being calculated respectively by means of a first (11) and a second (12) predetermined models, the method being **characterized in that** said models are predetermined as a function of the temperature setpoint (D3), of a parameter (D2) representative of the outside air temperature and parameter (D1) representative of sunshine, the first and second models (11, 12) determining applicable power values (Pcv, Pst) for the calculation of the first and second quantities of energy (E_cv, E_st) respectively by predetermined power mapping stored in the memory of the control device.

2. Method according to claim 1, **characterized in that** the applicable power values are determined by mapping as a function of predetermined sunshine values (x1-xn), the temperature setpoint (D3) and the parameter representative of the temperature. outside air (D2).

3. Method according to claim 1 or 2, **characterized in that** the first quantity of energy (E_cv) and the second quantity of energy (E_st) are further calculated as a function of a convergence time (t2), a third model (13) determining values of the applicable convergence time (t2) by predetermined convergence time mapping.

4. Method according to claim 3, **characterized in that** the values of the applicable convergence time are determined by mapping as a function of predetermined sunshine values (x1-xn), of the temperature setpoint (D3) and of the representative parameter of the outside air temperature (D2).

5. Method according to claim 3 or 4, **characterized in that** it further comprises the steps of calculating a remaining convergence time (t3) after the detection of the triggering of the thermal conditioning system, and the updating of the first quantity of energy (E_cv) and of the second quantity of energy (E_st) as a function of the remaining convergence time (t3).

6. Method according to claim 5, **characterized in that** the remaining convergence time (t3) is determined from an estimate of the activation time (t1) of the thermal conditioning system and the convergence time (t2).

7. Method according to claim 6, **characterized in that** the activation time (t1) of the thermal conditioning system is calculated by calculating the time integration of a data signal (D4 ; D5) representative of the activation of the packaging system.

8. Method according to any one of claims 1 to 7, **characterized in that** the temperature setpoint (D3) is a value fixed and programmed before the rolling of the planned route.

9. Module for estimating a control device of a vehicle in charge of estimating the energy needs of a thermal conditioning system of the motor vehicle, **characterized in that** it is configured to implement the method according to any one of claims 1 to 8.

10. Motor vehicle comprising a module for estimating a control device according to claim 9.
